(19) Europäisches Patentamt

European Patent Office

Office européen des brevets

(11) Publication number: **0 255 104**
**A2**

(12) **EUROPEAN PATENT APPLICATION**

(21) Application number: 87110905.4

(22) Date of filing: 28.07.87

(51) Int. Cl.⁴: **A47J 27/14** , A47J 37/04

(30) Priority: 30.07.86 IT 2132986

(43) Date of publication of application:
**03.02.88 Bulletin 88/05**

(84) Designated Contracting States:
**AT BE CH DE ES FR GB GR LI LU NL SE**

(71) Applicant: **Gusberti, Emilio**
**Corso Torino 20/A**
**I-27029 Vigevano Pavia(IT)**

(72) Inventor: **Gusberti, Emilio**
**Corso Torino 20/A**
**I-27029 Vigevano Pavia(IT)**

(74) Representative: **Dr. Ing. A. Racheli & C.**
**Viale San Michele del Carso, 4**
**I-20144 Milano(IT)**

(54) **Rotary cooking apparatus to individually cook a large number of food portions.**

(57) A cooking apparatus comprises a plurality of gas rings (35), generally a plurality of cooker elements (30), mounted in a detachable manner on a movable structure (14) that rotates intermittently in an adjustable manner, so that each gas-ring presents itself to the operator after a set interval of time.

FIG. 2

Xerox Copy Centre

EP 0 255 104 A2

## "ROTARY COOKING APPARATUS TO INDIVIDUALLY COOK A LARGE NUMBER OF FOOD PORTIONS"

The present invention refers to the field of cookers or cooking apparatus.

In various communities, for example restaurants, canteens and such, a large number of meals must be provided in a relatively short time, and these meals must be served at a different time for each diner. The problem is generally solved by using pre-cooked foods, cooked even several days before use, that are heated and finish cooked when the customer places the order.

This procedure, however, removes part of the nutritional value of the foods and it also has shortcomings as far as flavour is concerned, especially in the case of macaroni dishes and the like.

The ideal method of cooking food should be the domestic one, where small amounts of food undergo the complete cooking cycle without a break and are served as soon as they are ready. Of course this method cannot be applied in large communities because the customer would be forced to wait too long and it would require an excessive number of gas-rings and personnel to look after them, with a considerable effect on costs.

Various attempts have been made to remedy the above drawbacks. Rotary cooking machines have been devised comprising a series of baskets carried on a rotating carousel; as the carousel turns, the baskets, containing spaghetti for example, are carried into a stationary cooking means, generally comprising a bowl of cooking water where the baskets remain for a set time; after the next arc of rotation, the baskets are removed and dished up.

A disadvantage of said systems using the above technique lies in the fact that the equipment is not very flexible, being suitable only for producing macaroni or fried dishes.

The purpose of this invention is to remedy all the above drawbacks, i.e. to make it possible to completely cook single or at least small portions of food, individually, for large communities, keeping intact the organoleptic and nutritional properties of the food and nevertheless requiring a small number of personnel; a further purpose, moreover, is to permit different types of food to be cooked.

A further purpose still is to provide equipment that can be dismantled and transported with relative ease so that it can also be used for outdoor parties.

The above purposes have been achieved with a cooking apparatus comprising a rotating structure and a plurality of cooking elements mounted on the structure, preferably in a detachable manner. Each element comprises one or preferably a plurality of gas-rings (or electric hot plates) and means of supplying gas to the rings, preferably cylinders.

According to a preferred embodiment, the apparatus also comprises lifting and tipping arms for the pans, that can be operated manually or automatically, to dish up the food.

The new apparatus makes it possible to individually cook single portions or small groups of single portions though allowing to cook a large number of portions on the whole; it allows a considerable saving in personnel costs, since few staff are able to supervise a large number of cooking operations; it is versatile, in that it allows different types of food to be cooked, for example even pizzas or the like that must be oven-cooked; lastly, since it can be built in such a way that it can be dismantled, it is easy to transport.

An exemplary embodiment of the invention is described below with reference to the attached drawings in which:

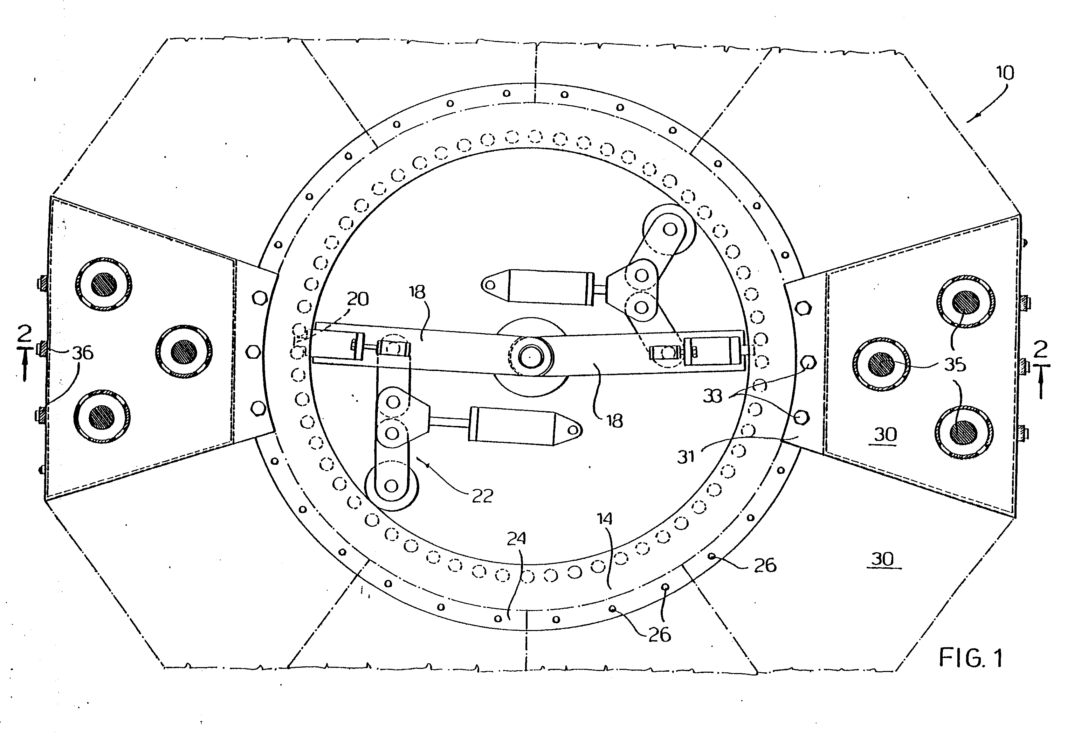

Fig. 1 is a plan view of the cooking apparatus; for clarity the gripping arm assembly has been removed; two cooker elements are drawn completely; only the outline of the others is indicated by chains;

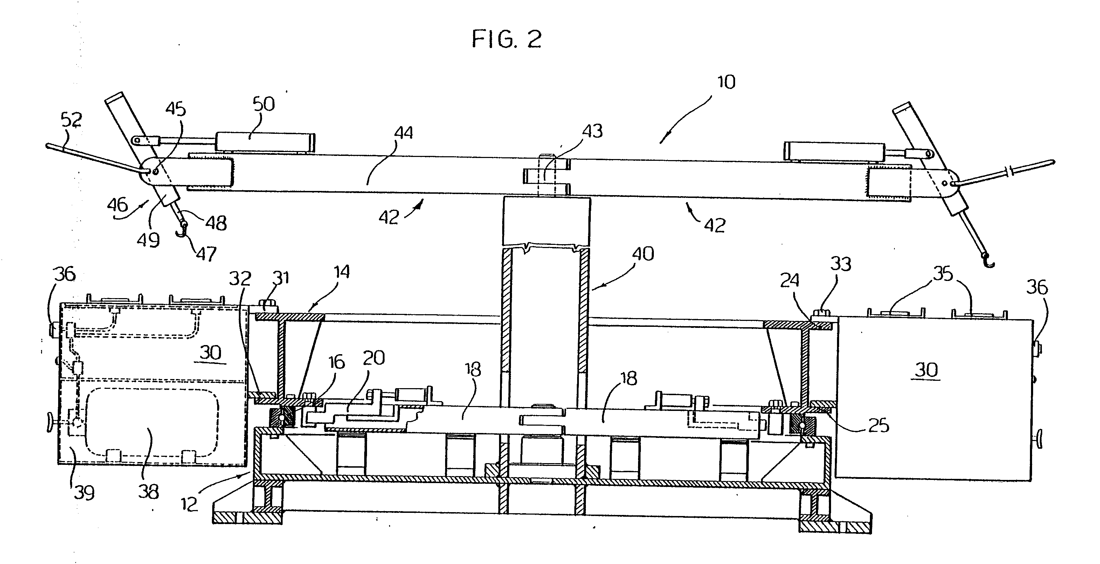

Fig. 2 is a section along 2-2 in fig. 1;

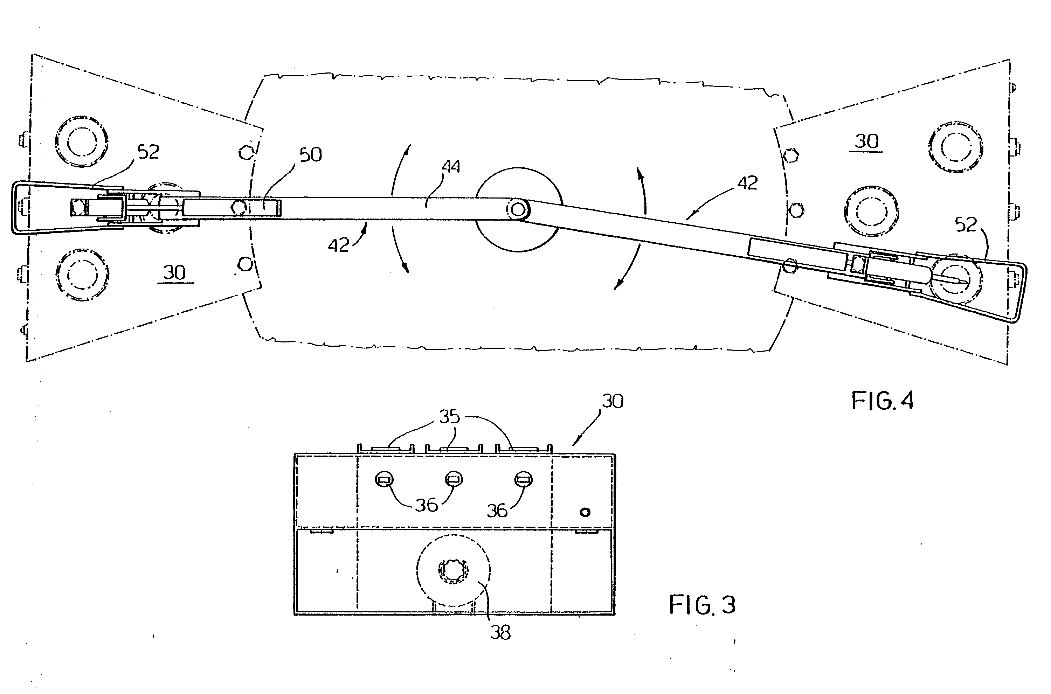

Fig. 3 is a front view of a cooker element;

Fig. 4 is a plan view of the lifting arms; the lower part of the cooking apparatus is shown by chains.

With reference to the drawings, a cooking apparatus according to the present invention is designated as a whole by 10 and comprises, on a fixed base 12, a rotating carousel 14, supported in a rotary manner on the base 12 by means of a thrust bearing 16. The carousel 14 preferably rotates by steps. The step rotation drive for the carousel may be of any known type, for example in the drawings a drive is indicated comprising arms 18 pivoted in the centre of rotation, that have at the end an engaging tooth 20, movable between a retracted position and an extended position, in which it engages cooperating rungs or teeth on the carousel. A toggle system 22 controlled by a cylinder piston controls an angular movement of each arm. The drive system will not be described in any greater detail herein, since it is not part of this invention.

The carousel 14 has a circular top edge 24, extending outwards and a circular bottom edge 25 extending outwards. The top edge at least has angularly spaced holes 26. Each cooker element designated by 30 has a substantially trapezoidal shape in the plan view and has an upper tongue 31 and a lower tongue 32 to engage on edges 24 and 25 respectively. Tongue 31 is fixed by means of bolts 33.

The cooker element comprises one or more gas-rings 35 with relative gas supply means, regulating means 36 and possibly signaling means; it can also include its own gas cylinder 38 in a special housing 39; moreover it can also include an oven.

In any case each cooking element could have any shape and any number of gas-rings and it could also be fixed to the carousel if necessary. The carousel preferably makes from 10 to 120 automatic movements.

From the base 12 there preferably rises a central column 40 bearing one or more arms 42 cantilever projecting over the cooker elements, and rotatable around a pivot 43. A description follows of arm 42 only, the other being identical.

Arm 42 comprises a rod 44; at the opposite end of said rod 44 to the pivot a gripping device 46 is supported in a rotary manner with respect to a horizontal axis 45. The gripping device may have any suitable shape and preferably comprises a hook 47 integral with the mobile element 48 of a cylinder piston assembly 49. The cylinder piston assembly 49 is supported in a rotary manner around said pivot 45 and its slope is determined by means of a second cylinder piston assembly 50. Number 52 indicates a handle.

The apparatus is equipped with a per sè known means of regulating the speed and modes of rotation.

Operation of the apparatus is briefly described below.

An operator, who remains in a substantially stationary position, sets the apparatus in rotation, lights the gas-rings (and the oven if required) and places the pans on the rings.

The rotation speed is set so that the same gas-ring presents itself to the operator after a desired interval, for example after about 8 minutes when cooking spaghetti. With suitable planning other foods can be selected that have a cooking and heating time that is a multiple of that of the basic food.

In this way, when the operator has put the spaghetti into a pan of boiling water on one of the gas-rings of the first cooker element and possibly put a sauce or a main course on a gas-ring nearby, a first rotation step takes place and the operator can repeat the same operations on the next cooking element. After eight minutes the first element with the cooked pasta and the warmed sauce will present itself to the operator again, so that the food can be removed and the element used again. Subsequently, after a suitable interval, the second gas-ring presents itself, it also with the cooked food. If a food requiring a multiple cooking time is cooking on one of the gas-rings, the operator will let the corresponding element go by without removing the food.

Alternatively, the food loading operations can be carried out from a different position around the cooker, by another operator or by automatic means.

To tip up the pan and take out the contents, or to remove the basket from the pan, the operator may use a device 42. Moreover, to cooperate with apparatus 10, devices can be provided to weigh and load the pasta or rice or other elements, such as are already available on the market.

In this way, a single operator or a few operators are able to individually cook through a complete cycle (i.e. from a raw state to a cooked state without breaks) a large number of food portions, and serve them at short intervals.

## Claims

1. A cooking apparatus characterized in that it comprises a rotary structure (14), rotation means for said structure and a plurality of heating cooking elements (30; 35) integral with said rotary structure.

2. A cooking apparatus according to claim 1, characterized in that said cooking elements (30) are mounted on said structure in a detachable manner.

3. A cooking apparatus according to claim 1, characterized in that each cooking element (30) comprises at least one gas-ring (35) and means for supplying gas to it.

4. A cooking apparatus according to claim 1, characterized in that each of said cooking elements (30) comprises an oven.

5. An apparatus according to claim 1, characterized in that each of said cooking elements (30) comprises a housing (39) for gas cylinders (38).

6. An apparatus according to claim 1, characterized in that it also comprises a lifting device comprising at least one arm (42) that rotates around a vertical pivot (43) and bears a hook (47) at the end, and is movable with a vertical angular movement.

7. A cooking apparatus according to what is described herein and illustrated in the attached drawings.

FIG. 1

FIG. 2

FIG. 4

FIG. 3

0 255 104